# EUROPEAN PATENT APPLICATION

(11) **EP 2 416 553 A1**
(43) Date of publication of application: **08.02.2012**
(21) Application number: 10758444.3
(22) Date of filing: 15.03.2010
(51) Int. Cl.: H04N 1/00, H04N 1/21, H04N 1/387

(54) **COMMUNICATION SYSTEM, COMMUNICATION TERMINAL, SERVER, DATA STORING METHOD AND RECORDING MEDIUM**

(30) Priority: 30.03.2009 JP 2009082213
(71) Applicant: NEC Corporation, Tokyo 108-8001 (JP)
(72) Inventor: TANAKA, Hideaki, Tokyo 108-8001 (JP)
(74) Representative: Vossius & Partner
(86) International application number: PCT/JP2010/054753
(87) International publication number: WO 2010/113670

(57) **Abstract**

Image data stored in a server can be easily removed therefrom by use of a communication terminal. There are included a communication terminal for transmitting an acquired image data and a server for storing the image data received from the communication terminal. The communication terminal transmits an acquired image data to the server, displays abbreviated data which allows the image data to be identified and the data amount of which is smaller than the data amount of the image data. And, when having accepted, from the exterior, a removal of the image data instructed by designating the displayed abbreviated data, the communication terminal requests the server to remove the image data corresponding to the abbreviated data. The server stores, into a database provided therein, the image data received from the communication terminal. And, when having been requested, by the communication terminal, to remove the image data, the server removes the image data from the database.

## Description

### TECHNICAL FIELD

The present invention relates to a communication system for storing data, a communication terminal, a server, a data storing method, and a recording medium.

### BACKGROUND ART

It has been possible to acquire data whose data amount is large, like image data and the like, by a communication terminal, in these days. The image data is data which the communication terminal downloads from a network, data which is photographed by using a photographing function provided in the communication terminal (e.g. mobile terminal), or the like. The acquired image data is stored in the communication terminal.

Meanwhile, as downsizing of a communication terminal, like a mobile terminal, is progressed, a capacity of a memory storing data is limited.

It is, therefore, difficult to store acquired image data in the communication terminal without limit.

A system is proposed, in which the image data acquired by the communication terminal is transmitted to a server for storage and is stored in the server (e.g. refer to Patent document 1).

In the system described in Patent document 1, the image data acquired by a mobile terminal is transmitted to a server, and the server stores the image data transmitted from the mobile terminal. The mobile terminal stores data with low-resolution (thumbnail image) corresponding to the image data transmitted to the server.
Patent document 1: Japanese Patent Application Laid-Open No. 2005-109684
Patent document 2: Japanese Patent Application Laid-Open No. 2002-342205
Patent document 3: Japanese Patent Application Laid-Open No. 2004-166001
Patent document 4: Japanese Patent Application Laid-Open No. 2004-178018

### DISCLOSURE OF THE INVENTION

### TECHNICAL PROBLEM

There is, however, a problem in which it is required to download the image data from the server to the mobile terminal in order to remove the image data stored in the server from the mobile terminal in the system described in Patent document 1.

An object of the present invention is to provide a communication system for storing data, a communication terminal, a server, a data storing method, and a recording medium to solve the problem above-described.

### TECHNICAL SOLUTION

A communication system according to the present invention includes a communication terminal which transmits acquired image data and a server which stores the image data transmitted from the communication terminal, and
the communication terminal transmits the acquired image data to the server, displays abbreviated data that allows the image data to be identified and a data amount of which is smaller than the data amount of the image data, and when receiving, from the exterior, removal of the image data by designating the displayed abbreviated data, requests the server to remove the image data corresponding to the abbreviated data, and
the server stores the image data transmitted from the communication terminal into a database provided in the server, and when being requested to remove the image data by the communication terminal, removes the image data from the database.

A communication terminal according to the present invention includes
abbreviated data generation means for generating the abbreviated data that shows inputted image data to be identified and a data amount of which is smaller than the image data,
storage means for storing the abbreviated data,
communication means for transmitting the acquired image data to the server,
display means for displaying the abbreviated data, and
reception means for receiving designation of the abbreviated data from the exterior,
and the communication means transmits a removal requesting signal for requesting removal of the image data corresponding to the designated abbreviated data and the designated abbreviated data to the server.

A server according to the present invention is the server which stores image data transmitted from a communication terminal,
and includes
abbreviated data generation means for generating, on the basis of the image data transmitted from the communication terminal, abbreviated data that shows the image data to be identified and a data amount of which is smaller than the data amount of the image data,
database management means for linking the image data and the abbreviated data each other and storing the image data and the abbreviated data in a database provided in the server, and
communication means for transmitting the abbreviated data to the communication terminal, and
the database management means removes the image data from the database when being requested to remove the image data by the communication terminal.

A data storing method according to the present invention is the data storing method which is used in a communication system including a communication terminal which transmits acquired image data and a server which stores the image data transmitted from the communication terminal, and includes
an image data transmission process in which the communication terminal transmits the acquired image data to the server,
an image data storage process in which the server stores the image data transmitted from the communication terminal in the database provided in the server,
a process in which the communication terminal displays abbreviated data that allows the acquired image data to be identified and a data amount of which is smaller than the data amount of the image data,
a removal request process in which the communication terminal requests the server to remove the image data corresponding to the abbreviated data, when receiving, from the exterior, removal of the image data by designating the displayed abbreviated data, and
an image data removal process in which the server removes the image data from the database when being requested removal of the image data by the communication terminal.

A first recording medium according to the present invention stores a program which causes a communication terminal to execute
a step of, on the basis of the image data acquired by the communication terminal, generating the abbreviated data that shows the image data to be identified and a data amount of which is smaller than the data amount of the image data,
a step of storing the abbreviated data in the storage means provided in the communication terminal,
a step of transmitting the acquired image data to the server,
a step of displaying the abbreviated data,
a step of receiving removal of the image data, from the exterior, by designating the displayed abbreviated data, and
a step of transmitting a removal requesting signal for requesting removal of the image data and the designated abbreviated data to the server, when receiving, from the exterior, removal of the image data by designating the displayed abbreviated data.

A second recording medium according to the present invention stores a program which causes a server to execute
a step of, on the basis of image data transmitted from a communication terminal, generating the abbreviated data that shows the image data to be identified and a data amount of which is smaller than the data amount of the image data,
an image data storing step of linking the image data and the abbreviated data each other storming the image data and the abbreviated data in the database provided in the server,
an abbreviated data transmitting step of transmitting the abbreviated data to the communication terminal, and
an image data removing step of removing the image data from the database when removal of the image data is requested by the communication terminal.

### ADVANTAGEOUS EFFECTS

As described above, in the present invention, a user can easily remove the image data stored in the server from the communication terminal.

### BRIEF DESCRIPTIONS OF THE DRAWINGS

[FIG. 1] a diagram illustrating one exemplary embodiment of the communication system of the present invention,
[FIG. 2] a diagram illustrating a first configuration example of an inner configuration of the communication terminal shown in FIG. 1,
[FIG. 3] a diagram illustrating an example of an abbreviated data stored in a storing unit shown in FIG. 2,
[FIG. 4] a diagram illustrating a first configuration example of an inner configuration of the server shown in FIG. 1,
[FIG. 5] a diagram illustrating an example of linkage between the image data and the abbreviated data stored in a database shown in FIG. 4,
[FIG. 6] a sequence diagram illustrating a process in which the communication terminal makes the server store the image data, in a data storing method of a first exemplary embodiment,
[FIG. 7] a sequence diagram illustrating a process in which the server removes the image data stored therein, in the data storing method of the first exemplary embodiment,
[FIG. 8] a sequence diagram illustrating a process in which the communication terminal downloads the image data stored in the server, in the data storing method of the first exemplary embodiment,
[FIG. 9] a diagram illustrating a second configuration example of the inner configuration of the communication terminal shown in FIG. 1,
[FIG. 10] a diagram illustrating an example of linkage between data identification information and the abbreviated data stored in the storing unit shown in FIG. 9,
[FIG. 11] a diagram illustrating a second configuration example of the inner configuration of the server shown in FIG. 1,
[FIG. 12] a diagram illustrating an example of linkage between the image data and the data identification information stored in the database shown in FIG. 11,
[FIG. 13] a sequence diagram illustrating a process in which the communication terminal makes the server store the image data, in the data storing method of a second exemplary embodiment,
[FIG. 14] a sequence diagram illustrating a process in which the server removes the image data stored therein, in the data storing method of the second exemplary embodiment,
[FIG. 15] a sequence diagram illustrating a process in which the communication terminal downloads the image data stored in the server, in the data storing method of the second exemplary embodiment,
[FIG. 16] a diagram illustrating a third configuration example of the inner configuration of the communication terminal shown in FIG. 1, [FIG. 17] a diagram illustrating a third configuration example of the inner configuration of the server shown in FIG. 1,
[FIG. 18] a sequence diagram illustrating a profess in which the communication terminal makes the server store the image data, in the data storing method of a third exemplary embodiment,
[FIG. 19] a diagram illustrating a fourth configuration example of the inner configuration of the communication terminal shown in FIG. 1,
[FIG. 20] a diagram illustrating a fourth configuration example of the inner configuration of the server shown in FIG. 1,
[FIG. 21] a sequence diagram illustrating a process in which the communication terminal makes the server store the image data, in the data storing method of a fourth exemplary embodiment,
[FIG. 22] a diagram illustrating an example of a display screen in a display unit on which the abbreviated data is displayed,
[FIG. 23] a diagram illustrating a form in which a plurality of the communication terminals are connected with the server,
[FIG. 24] a sequence diagram illustrating a process in which a communication terminal except the communication terminal storing the image data shown in FIG. 23 downloads the image data stored in the server,
[FIG. 25] a diagram illustrating another exemplary embodiment of the communication system of the present invention,

### BEST MODE FOR CARRYING OUT THE INVENTION

Exemplary embodiments of the present invention are described below with reference to the drawings.

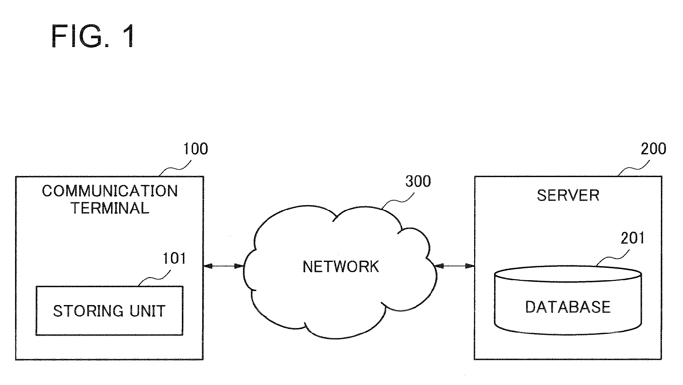

FIG. 1 is a diagram illustrating one exemplary embodiment of the communication system of the present invention. The exemplary embodiment includes a configuration in which a communication terminal 100 connects with a server 200 via a network 300 as shown in FIG. 1.

The communication terminal 100 is an information processing device with a communication function. The communication terminal 100 may be a mobile terminal or a common PC (Personal Computer). The communication function 100 included in the communication terminal 100 may be a communication function used in a cellular phone, like a usual W-CDMA (Wideband Code Division Multiple Access). The communication function included in the communication terminal 100 may be a short-distance communication function, like W-LAN (Wireless-Local Area Network) communication like a Wi-Fi (registered trademark), an infra-red communication, or Bluetooth (registered trademark) communication. It is desirable that the communication terminal 100 includes a communication function which enables a high-capacity communication with relatively low cost such as W-LAN. The communication terminal 100 includes a function acquiring image data. The image data acquiring function is not limited to a specific one. For example, the image data acquiring function may be a function which acquires the image data by photographing using a camera. Or, the image data acquiring function may be a function which acquires the image data from another communication terminal or a network using the communication function. The communication terminal 100 transmits the acquired image data to the server 200 for storage thereof. The communication terminal 100 requests the server 200 to remove the image data stored in the server 200. The communication terminal 100 also requests the server 200 to download the image data stored in the server 200. These exchange of information between the communication terminal 100 and the server 200 are not limited to a specific way. The exchange of information between the communication terminal 100 and the server 200 may be carried out, for example, by employing software (e.g. Java application, native application, a browser, or the like) includes in the communication terminal 100.

The communication terminal 100 includes a storing unit 101.

The storing unit 101 stores information.

The server 200 stores the image data transmitted from the communication terminal 100 through a network 300. The server 200 removes image data stored therein in response to a request for removal of the image data from the communication terminal 100.
The server 200 transmits the image data stored therein to the communication terminal 100 in response to a request for downloading the image data from the communication terminal 100. Data stored in the server 200 may be not only the image data like a still picture or a motion picture, but the other multi-media data, and the like.

The server 200 includes a database 201.

The database 201 stores the image data transmitted from the communication terminal 100.

Four exemplary embodiments which configure the present invention by using the communication terminal 100 and the server 200 shown in FIG. 1 are described below.

### (A first exemplary embodiment)

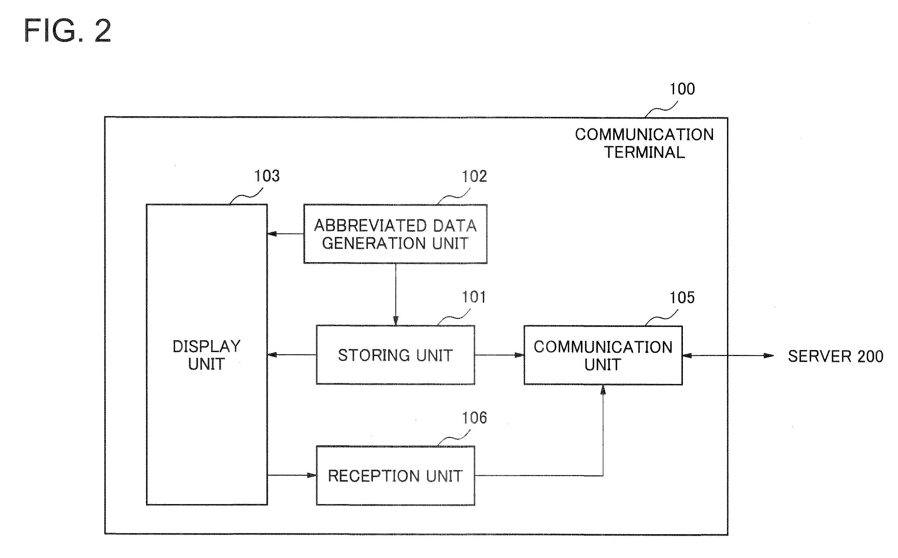

FIG. 2 is a diagram illustrating a first configuration example of an inner configuration of the communication terminals 100 shown in FIG. 1.

In the first exemplary embodiment, the communication terminal 100 shown in FIG. 1 includes a storing unit 101, an abbreviated data generation unit 102, a display unit 103, a communication unit 105, and a reception unit 106, as shown in FIG. 2. FIG. 2 illustrates elements related to descriptions of the exemplary embodiment, in the elements which configures the communication terminal 100 in FIG. 1.

The abbreviated data generation unit 102 generates, on the basis of an image data which the communication terminal 100 acquires, an abbreviated data corresponding to the image data.
The abbreviated data is data (data whose size of displayed image is small, data with low-resolution, or the like) with a data amount which is smaller the data amount of the image data. The abbreviated data is data, such as a thumb-nail image or the like, which a user using the communication terminal 100 is capable of indentifying the image data, when the abbreviated data is displayed on the display unit 103. The abbreviated data may be generated by using a common method. For example, a generation method is applicable, where a device having a plurality of pieces of image data tabulates a miniature version of the image data as an index of the stored image data.

The display unit 103 displays the abbreviated data stored in the storing unit 101. The display unit 103 may display a list of the abbreviated data. The display unit 103 may be a device which is able to display information. For example, the display unit 103 may be a common display device. It is desirable that the display unit 103 displays the abbreviated data when a request for display is received from a user using the communication terminal 100.

The reception unit 106 receives a request for removal of the image data by designating, from the exterior, the abbreviated data displayed on the display unit 103. The reception unit 106 outputs the abbreviated data which is designated when removal of the image data is received and information representing the request for removal of the image data to the communication unit 105. The reception unit 106 receives a request for download of the image data by designating, from the exterior, the abbreviated data displayed on the display unit 103. The reception unit 106 outputs the abbreviated data which is designated when download of the image data is received and information representing the request for download of the image data to the communication unit 105.

The storing unit 101 stores the abbreviated data generated by the abbreviated data generation unit 102.

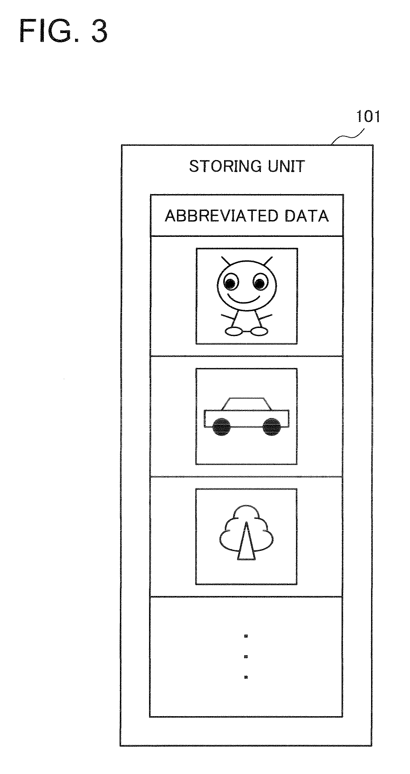

FIG. 3 is a diagram illustrating an example of the abbreviated data stored in the storing unit 101 shown in FIG. 2.

The storing unit 101 shown in FIG. 2 stores the abbreviated data, as shown in FIG. 3. The abbreviated data is generated by the abbreviated data generation unit 102 on the basis of the image data acquired by the communication terminal 100.

The communication unit 105 transmits the image data acquired by the communication terminal 100 and the abbreviated data generated on the basis of the image data by the abbreviated data generation unit 102 and stored in the storing unit 101, to a server 200 through a network 300. When the abbreviated data and information representing that removal of the image data is requested are outputted from the reception unit 106, the communication unit 105 transmits the outputted abbreviated data and a removal requesting signal for requesting removal of the image data to the server 200 through the network 300. When the abbreviated data and information representing that download of the image data is requested are outputted from the reception unit 106, the communication unit 105 transmits the outputted abbreviated data and a download requesting signal for requesting download of the image data to a server 200 through a network 300. When these are transmitted to the server 200, it is needed to designate the server 200 as a transmission destination. An IP (Internet Protocol) address of the server 200 or a URL (Uniform Resource Locator) of the server 200 is designated in order to designate the server 200. These may be ones stored in the storing unit 101, or ones which the communication terminal 100 identifies in advance.

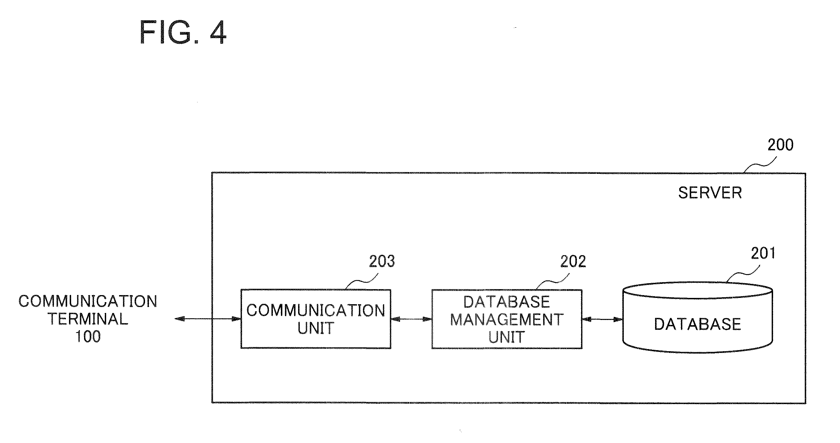

FIG. 4 is a diagram illustrating a first configuration example of an inner configuration of the server shown in FIG. 1.

In the first exemplary embodiment, the server 200 shown in FIG. 1 includes a database 201, a database management unit 202 and a communication unit 203 as shown in FIG. 4. FIG. 4 illustrates elements related to descriptions of the exemplary embodiment, in the elements which configures the server 200 in FIG. 1.

The communication unit 203 includes an interface carrying out communication with the communication terminal 100 through the network 300.

The database management unit 202 links the image data transmitted from the communication terminal 100 and the abbreviated data each other and makes the database 201 store the image data and the abbreviated data. The database management unit 202 removes the image data linked with the abbreviated data from the database 201 when the removal requesting signal and the abbreviated data are transmitted from the communication terminal 100. The database management unit 202 reads out the image data which is linked with the abbreviated data and is stored in the database 201 from the database 201, and transmits to the communication terminal 100 through the communication unit 203, when the download requesting signal and the abbreviated data are transmitted from the communication terminal 100.

The database 201 links the image data transmitted from the communication terminal 100 with the abbreviated data, and stores the image data and the abbreviated data.

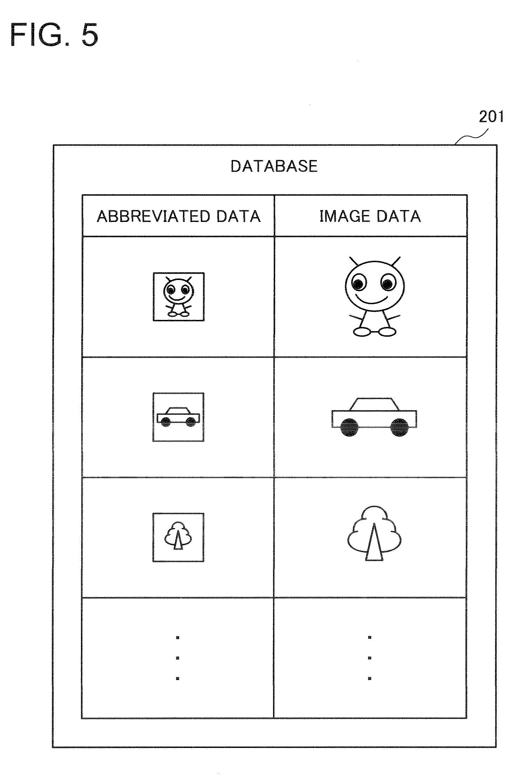

FIG. 5 is a diagram illustrating an example of linkage between the image data and the abbreviated data stored in the database 201 shown in FIG. 4.

In the database 201 shown in FIG. 4, the abbreviated data and the image data are linked each other and stored as shown in FIG. 5. These are data transmitted from the communication terminal 100 through the network 300.

A data storing method in the first exemplary embodiment is described below. A process where the communication terminal 100 makes the server 200 store the image data is described, in the data storing method of the first exemplary embodiment.

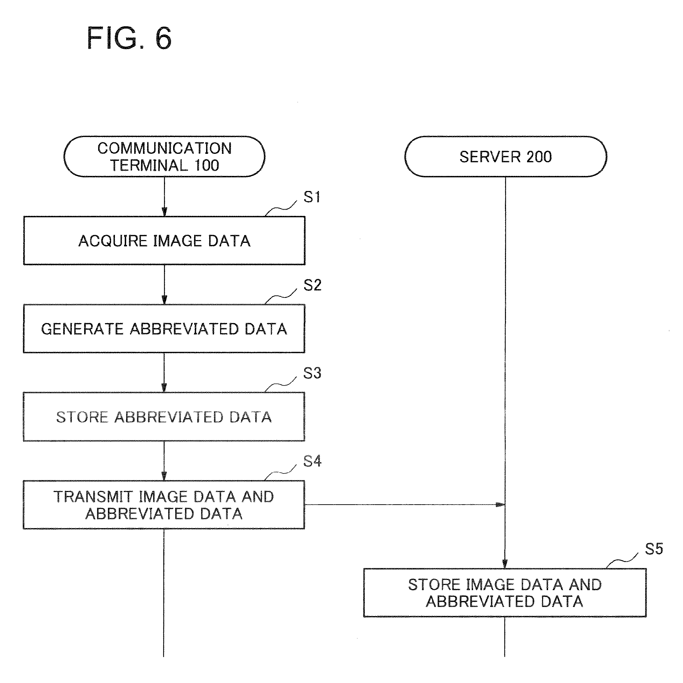

FIG. 6 is a sequence diagram illustrating the process in which the communication terminal 100 makes the server 200 store the image data, in the data storing method of the first exemplary embodiment.

Initially, the image data is acquired by the communication terminal 100 (step S1). In this acquiring method, any method can be employed as described above and is not specified here.

On the basis of the acquired image data, the abbreviated data corresponding to the image data is generated in the abbreviated data generation unit 102 (step 52).

Next, the abbreviated data generated in the abbreviated data generation unit 102 is stored in the storing unit 101 (step S3).

The image data and the abbreviated data stored in the storing unit 101 are transmitted from the communication unit 105 to the server 200 through the network 300 (step S4).

This transmission is performed at least after the abbreviated data is stored in the storing unit 101. For example, the transmission may be performed when an instruction of transmission is received from a user using the communication terminal 100. Or, the transmission may be performed at predetermined timing, like preliminarily set time in a day. Or, the transmission may be performed when a data amount of the acquired image data exceeds a preliminarily set data amount or a data amount which the communication terminal 100 can store. Or, the transmission may be performed when it is determined whether or not a file format of the acquired image data is a preliminarily set file format and it is determined that the file format of the acquired image data is the preliminarily set file format.

When the image data and the abbreviated data transmitted from the communication terminal 100 are received by the communication unit 203 in the server 200, the received image data and the abbreviated data are linked each other and stored in the database 201 by the database management unit 202 (step S5).

A process of removal of the image data stored in the server 200 in the data storing method of the first exemplary embodiment is described.

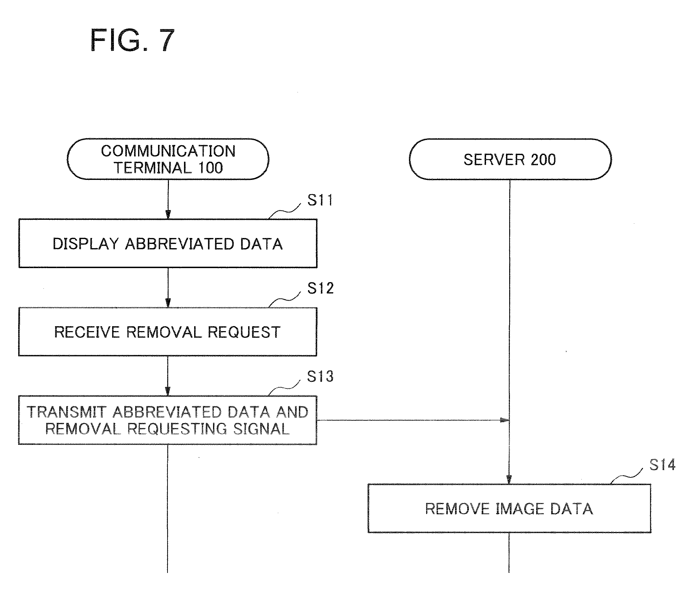

FIG. 7 is a sequence diagram illustrating the process in which the server removes the image data stored therein, in the data storing method of the first exemplary embodiment.

The abbreviated data stored in the storing unit 101 is displayed on the display unit 103 (step S11). Timing of displaying the abbreviated data on the display unit 103 is not specified here as described above.

After that, by designating, from the exterior, the abbreviated data displayed on the display unit 103 by a user using the communication unit 100, a request for removal of the image data is received by the reception unit 106 (step S12). The designated abbreviated data and information representing the request for removal of the image data are outputted from the reception unit 106 to the communication unit 105.

The outputted abbreviated data and the removal requesting signal for requesting removal of the image data are transmitted from the communication unit 105 to the server 200 through the network 300 (step S13).

When the abbreviated data and the removal requesting signal transmitted from the communication terminal 100 are received by the communication unit 203, the image data linked with the received abbreviated data is removed from the database 201 by the database management unit 202 (step S14). In this case, the abbreviated data linked with the removed image data may be removed at the same time.

Next, a process where the communication terminal 100 downloads the image data stored in the server 200, in the data storing method of the first exemplary embodiment is described.

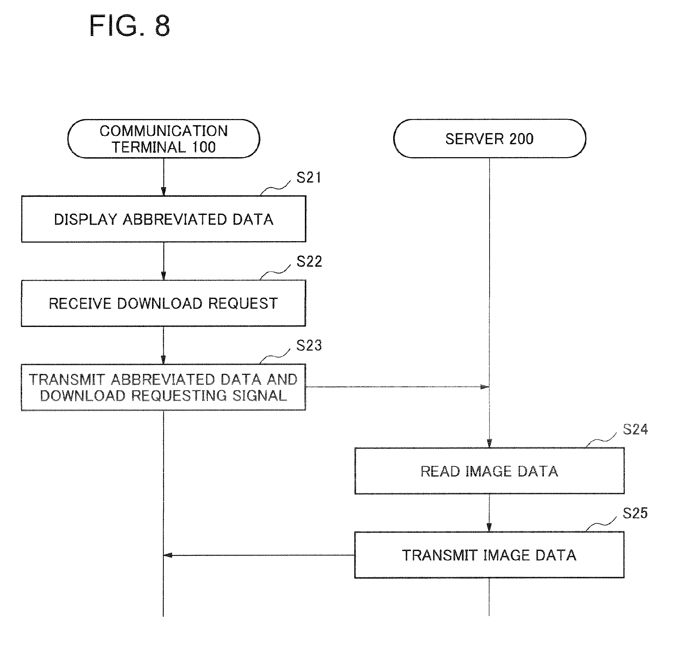

FIG. 8 is a sequence diagram illustrating the process in which the communication terminal downloads the image data stored in the server, in the data storing method, of the first exemplary embodiment.

Initially, the abbreviated data stored in the storing unit 10 is displayed on the display unit 103 (step S21). The display timing is not particularly provided.

After that, by designating, from the exterior, the abbreviated data displayed on the display unit 103 by a user using the communication unit 100, a request for download of the image data is received by the reception unit 106 (step S22). The designated abbreviated data and information representing the request for download of the image data are outputted from the reception unit 106 to the communication unit 105.

The outputted abbreviated data and a download request signal for requesting download of the image data are transmitted from the communication unit 105 to the server 200 through the network 300 by the communication unit 105 (step S23).

When the abbreviated data and the download request signal transmitted from the communication terminal 100 are received by the communication unit 203, the image data linked with the received abbreviated data is read from the database 201 by the database management unit 202 (step S24).

The read image data is transmitted from the communication unit 203 to the communication terminal 100 through the network 300 (step S25).

As described above, the communication system of the first exemplary embodiment can remove the image data stored in the server from the communication terminal without downloading the image data from the server to the communication terminal. That is because the communication terminal requests the server to remove the image data corresponding to the designated abbreviated data when the communication terminal displays the abbreviated data and receives removal of the image data through designation of the abbreviated data.

### (A second exemplary embodiment)

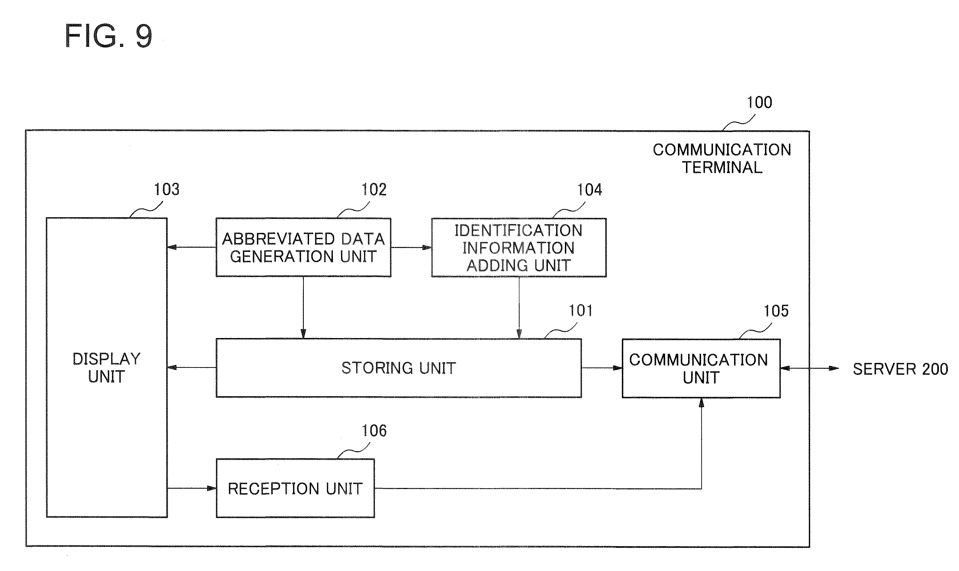

FIG. 9 is a diagram illustrating a second configuration example of the inner configuration of the communication terminal 100 shown in FIG. 1.

In the second exemplary embodiment, the communication terminal 100 shown in FIG. 1 includes the storing unit 101, the abbreviated data generation unit 102, the display unit 103, an identification information adding unit 104, the communication unit 105, and the reception unit 106 as shown in FIG. 9. The configuration of FIG. 9 further includes the identification information adding unit 104 in addition to the elements shown in FIG. 2. FIG. 9 illustrates elements related to descriptions of the exemplary embodiment, in the elements which configures the communication terminal 100 of FIG. 1.

The abbreviated data generation unit 102 is the same as that shown in FIG. 2.

The display unit 103 is the same as that shown in FIG. 2.

The identification information adding unit 104 adds data identification information specific to the image data to the image data in order to identify the image data acquired by the communication terminal 100.

The reception unit 106 is the same as that shown in FIG. 2.

The storing unit 101 links the abbreviated data generated by the abbreviated data generation unit 102 and the data identification information which is added to the image data, which is the base of the abbreviated data, by the identification information adding unit 104 each other, and stores the abbreviated data and the data identification information.

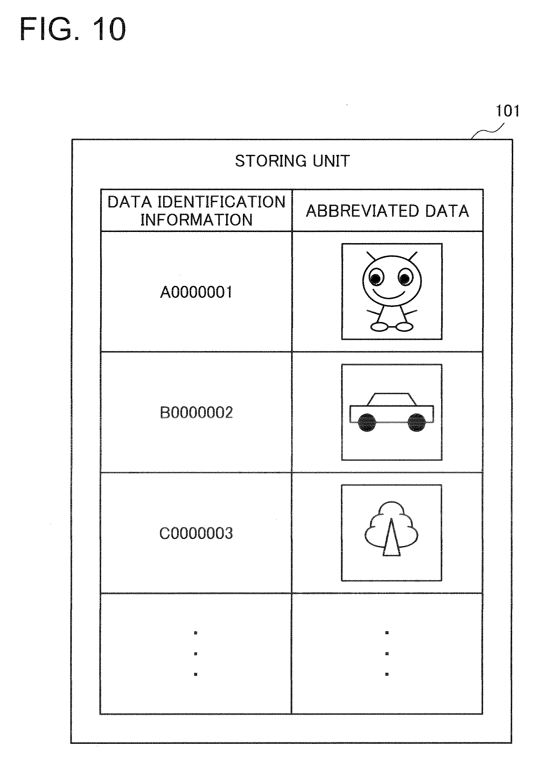

FIG. 10 is a diagram illustrating an example of linkage between the data identification information and the abbreviated data stored in the storing unit 101 shown in FIG. 9.

The data identification information and the abbreviated data are linked each other and stored in the storing unit 101 of FIG. 9 as shown in FIG. 10. The data identification information is provided to the image data in the identification information adding unit 104. And the image data can be identified individually by the data identification information. The abbreviated data is generated by the abbreviated data generation unit 102 on the basis of the image data to which the linked data identification information is provided.

The communication unit 105 transmits the image data acquired by the communication terminal 100 and the data identification information which the identification information adding unit 104 adds to the image data, to the server 200 through the network 300. When the abbreviated data and information representing the request for removal of the image data are outputted from the reception unit 106, the communication unit 105 reads out the data identification information linked with the abbreviated data from the storing unit 101. The communication unit 105 transmits the read data identification information and the removal requesting signal for requesting removal of the image data to the server 200 through the network 300. When the abbreviated data and information representing a request for download of the image data are outputted from the reception unit 106, the communication unit 105 reads out the data identification information linked with the abbreviated data from the storing unit 101. The communication unit 105 transmits the read data identification information and the download requesting signal for requesting download of the image data to the server 200 through the network 300. Designation of transmission destination is the same as that of the first exemplary embodiment.

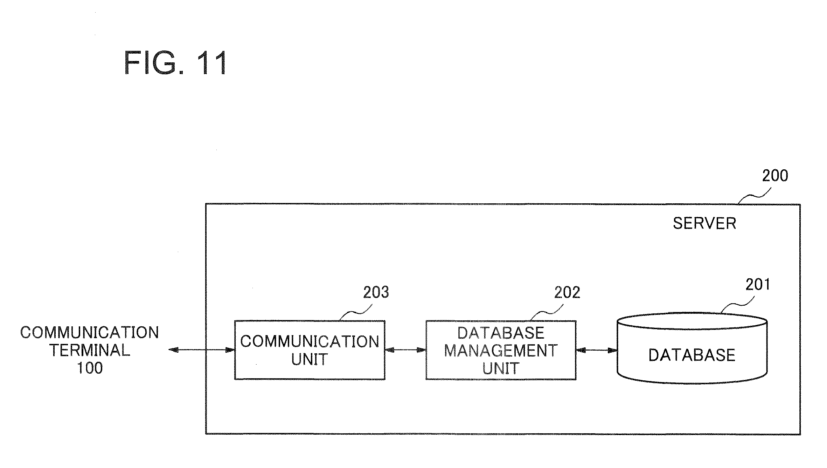

FIG. 11 is a diagram illustrating a second configuration example of the inner configuration of the server 200 shown in FIG. 1.

In the second exemplary embodiment, the server shown in FIG. 1 includes the database 201, the database management unit 202, and the communication unit 203 as shown in FIG. 11. FIG. 11 illustrates elements related to descriptions of the exemplary embodiment, in the elements which configures the server 200 of FIG. 1.

The communication unit 203 is the same as that shown in FIG. 4.

The database management unit 202 links the image data transmitted from the communication terminal 100 and the data identification information each other, and makes the database 201 store the image data and the data identification information. The database management unit 202 removes the image data linked with the data identification information from the database 201 when the removal requesting signal and the data identification information are transmitted from the communication terminal 100. When the download requesting signal and the data identification information are transmitted from the communication terminal 100, the database management unit 202 reads out the image data, from the database 201, which is linked with the data identification information and is stored in the database 201. The database management unit 202 transmits the read image data to the communication terminal 100 through the communication unit 203.

The database 201 links the image data transmitted from the communication terminal 100 and the data identification information each other, and stores the image data and the data identification information.

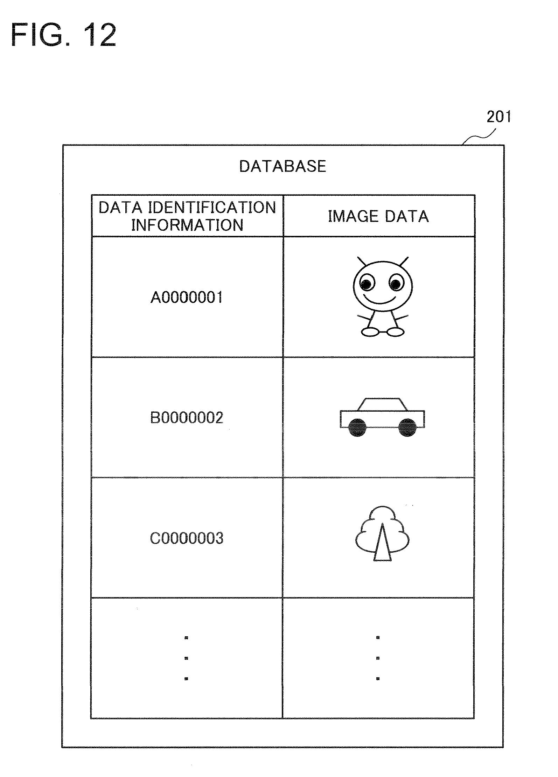

FIG. 12 is a diagram illustrating an example of linkage between the image data and the data identification information stored in the database 201 shown in FIG. 11.

The data identification information and the image data are linked each other and stored in the database 201 shown in FIG. 11, as shown in FIG. 12. These are data transmitted from the communication terminal 100 through the network 300.

A data storing method of the second exemplary embodiment is described below. Initially, a process in which the communication terminal 100 makes the server 200 store the image data, in the data storing method of the second exemplary embodiment, is described.

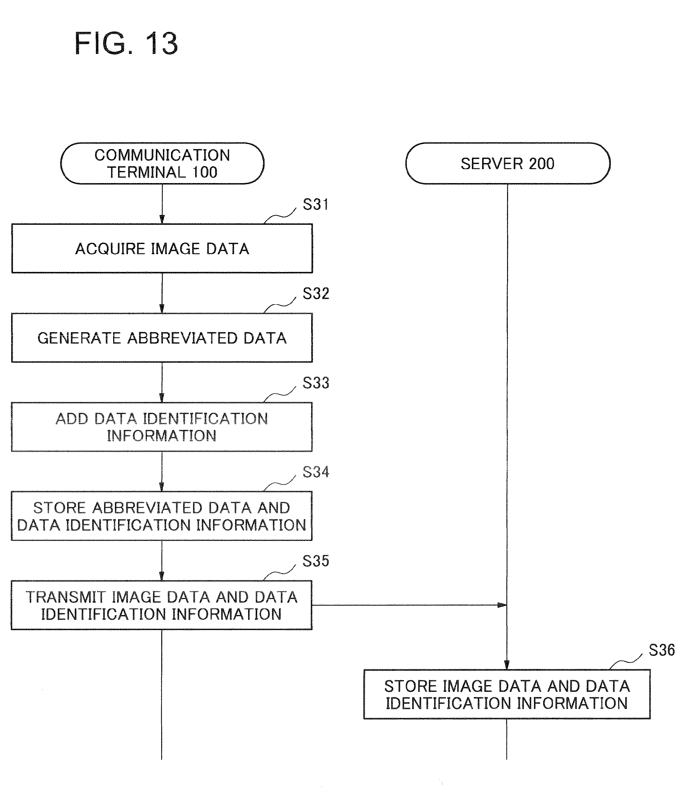

FIG. 13 is a sequence diagram illustrating the process in which the communication terminal 100 makes the server 200 store the image data, in the data storing method of the second exemplary embodiment.

Initially, the image data is acquired by the communication terminal 100 (step S31). About this acquiring method, any method may be employed as described above and is not specified here.

The abbreviated data corresponding to the image data is generated in the abbreviated data generation unit 102 on the basis of the acquired image data (step S32).

The identification information adding unit 104 adds the specific data identification information, which is able to identify the acquired image data, to the image data (stepS33).

Next, the abbreviated data generated by the abbreviated data generation unit 102 and the data identification information provided by the identification information adding unit 104 are linked each other, and stored in the storing unit 101 (step S34).

The image data to which the identification information adding unit 104 adds the data identification information is transmitted from the communication unit 105 to the server 200 through the network 300.

The transmission only has to be performed after the identification information adding unit 104 adds the data identification information to the image data. For example, the transmission may be performed when an instruction of transmission from a user using the communication terminal 100 is received. Or, the transmission may be performed at predetermined timing, like preliminarily set time in a day. Or, the transmission may be performed when a data amount of the acquired image data exceeds a preliminarily set data amount or a data amount which the communication terminal 100 can store. Or, the transmission may be performed when it is determined whether or not a file format of the acquired image data is a preliminarily set file format and it is determined that the file format of the acquired image data is the preliminarily set file format.

When the image data and the data identification information transmitted from the commune terminal 100 are received by the communication unit 203 in the server 200, the received image data and the received data identification information are linked each other and stored in the database 201 by the data management unit 202 (step S36).

A process of removal of the image data stored in the server 200 in the data storing method of the second exemplary embodiment is described.

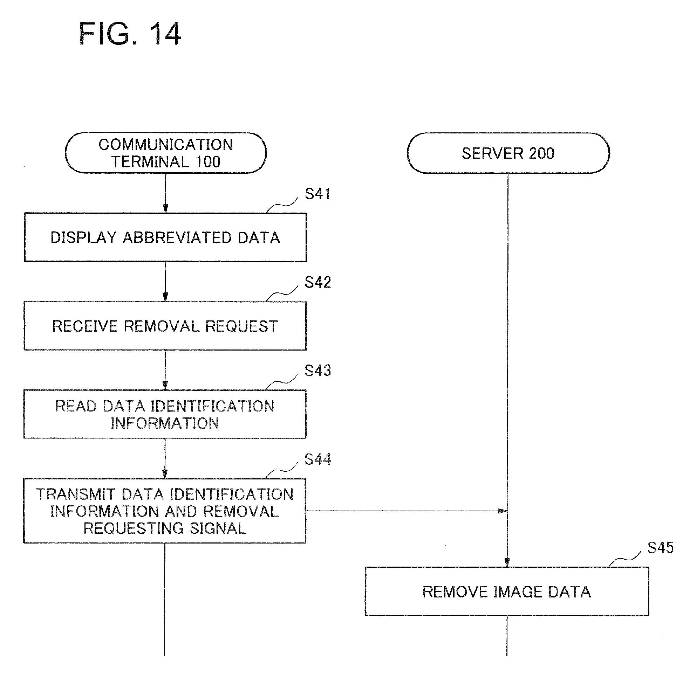

FIG. 14 is a sequence diagram illustrating the process of removal of the image data stored in the server 200, in the data storing method of the second exemplary embodiment.

Initially, the abbreviated data stored in the storing unit 101 is displayed on the display unit 103 (step S41). Timing of displaying the abbreviated data on the display unit 103 is not provided here as described above.

After that, by designating, from the exterior, the abbreviated data displayed on the display unit 103 by a user using the communication unit 100, a request for removal of the image data is received by the reception unit 106 (step S42). The designated abbreviated data and information representing the request for removal of the image data are outputted from the reception unit 106 to the communication unit 105.

The data identification information linked with the outputted abbreviated data is read from the storing unit 101 by the communication unit 105 (step S43). The read data identification information and the removal requesting signal for requesting removal of the image data are transmitted from the communication unit 105 to the server 200 through the network 300 (step S44).

When the data identification information and the removal requesting signal transmitted from the communication terminal 100 are received by the communication unit 203, the image data linked with the received data identification information is removed from the database 201 by the database management unit 202 (step S45). In this case, the data identification information linked with the removed image data may be removed at the same time.

Next, a process where the communication terminal 100 downloads the image data stored in the server 200 in the data storing method of the second exemplary embodiment is described.

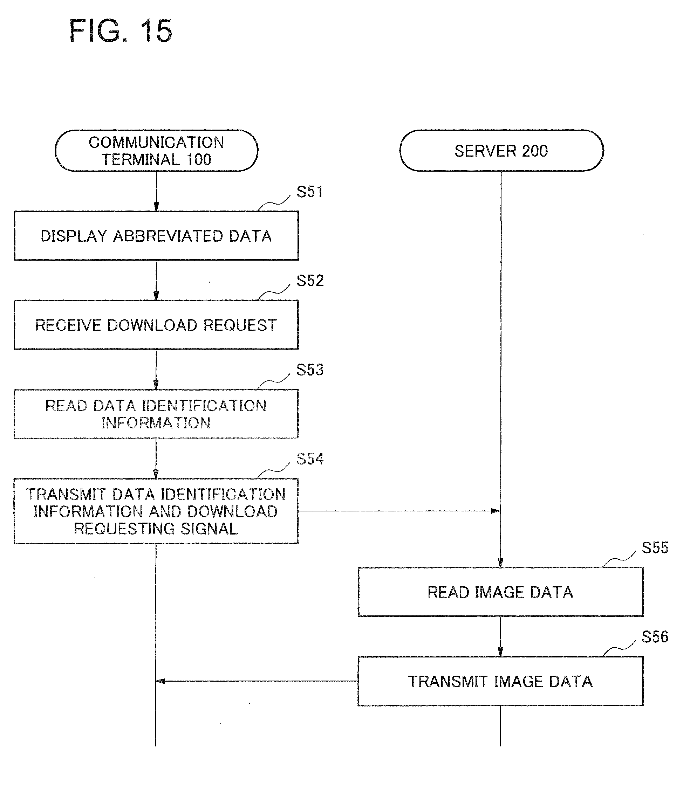

FIG. 15 is a sequence diagram illustrating the process in which the communication terminal 100 downloads the image data stored in the server 200, in the data storing method of the second exemplary embodiment.

Initially, the abbreviated data stored in the storing unit 101 is displayed on the display unit 103 (step S51).

After that, by designating, from the exterior, the abbreviated data displayed on the display unit 103 by a user using the communication unit 100, a request for download of the image data is received by the reception unit 106 (step S52). The designated abbreviated data and information representing the request for download of the image data are outputted from the reception unit 106 to the communication unit 105.

The data identification information linked with the outputted abbreviated data is read from the storing unit 101 by the communication unit 105 (step S53). The read data identification information and the download requesting signal for requesting download of the image data are transmitted from the communication unit 105 to the server 200 through the network 300 (step S54).

When the data identification information and the download requesting signal transmitted from the communication terminal 100 are received buy the communication unit 203, the image data linked with the received data identification information is read from the database 201 by the database management unit 202 (step S55).

The read image data is transmitted from the communication unit 203 to the communication terminal 100 through the network 300 (step S56).

The communication system of the second exemplary embodiment can remove the image data stored in the server from the communication terminal without downloading the image data from the server to the communication terminal, like as the first exemplary embodiment. That is because the communication terminal requests the server to remove the image data corresponding to the designated abbreviated data when the communication terminal displays the abbreviated data and receives removal of the image data through designation of the abbreviated data.

Generally, the data amount of the data identification information is smaller than the data amount of the abbreviated data. For this reason, the communication system of the second exemplary embodiment reduces a data communication volume between the communication terminal and the server compared with the first exemplary embodiment. That is because the communication terminal transmits the data identification information linked with the image data to the server, instead of transmitting the abbreviated data corresponding to the image data.

The communication system of the second exemplary embodiment reduces usage of the database compared with the first exemplary embodiment. That is because the server stores the data identification information linked with the image data in the database, instead of storing the abbreviated data corresponding to the image data.

### (A third exemplary embodiment)

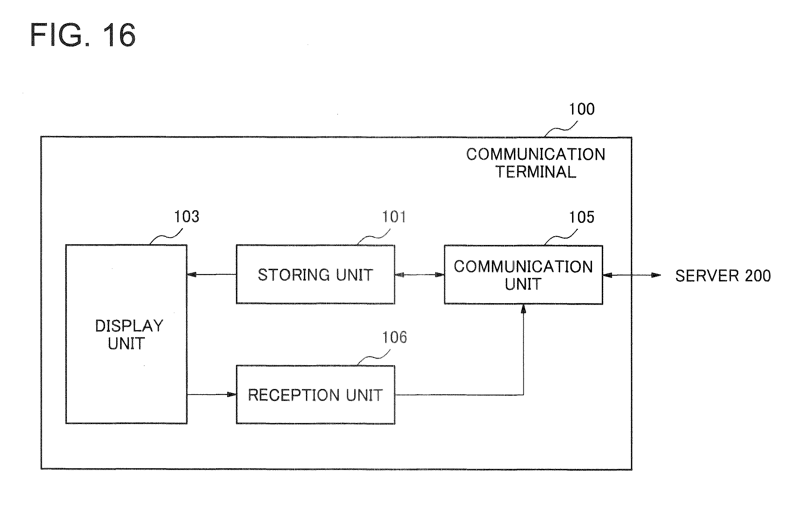

FIG. 16 is a diagram illustrating a third configuration example of the inner configuration of the communication terminal 100 shown in FIG. 1.

In the third exemplary embodiment, the communication terminal 100 shown in FIG. 1 includes the storing unit 101, the display unit 103, the communication unit 105, and the reception unit 106, as shown in FIG. 16. In the configuration shown in FIG. 16, the abbreviated data generation unit 102 is removed from the elements shown in FIG. 2. FIG. 16 illustrates elements related to descriptions of the exemplary embodiment, in the elements which configures the communication terminal 100 shown in FIG. 1.

The storing unit 101 stores the abbreviated data outputted from the communication unit 105. The abbreviated data is stored in the storing unit 105 as shown in FIG. 3.

The display unit 103 is the same as that shown in FIG. 2.

The reception unit 106 is the same as that shown in FIG. 2.

The communication unit 105 transmits the image data acquired by the communication terminal 100 to the server 200 through the network 300. The communication unit 105 outputs the abbreviated data transmitted from the server through the network 300 to the storing unit 101. When the abbreviated data and information representing a request for removal of the image data are outputted from the reception unit 106, the communication unit 105 transmits the outputted abbreviated data and a removal requesting signal for requesting removal of the image data to the server 200 through the network 300. When the abbreviated data and information representing a request for download of the image data are outputted from the reception unit 106, the communication unit, 105 transmits the outputted abbreviated data and a download requesting signal for requesting download of the image data to the server 200 through the network 300. Designation of transmission destination is the same as that of the first exemplary embodiment.

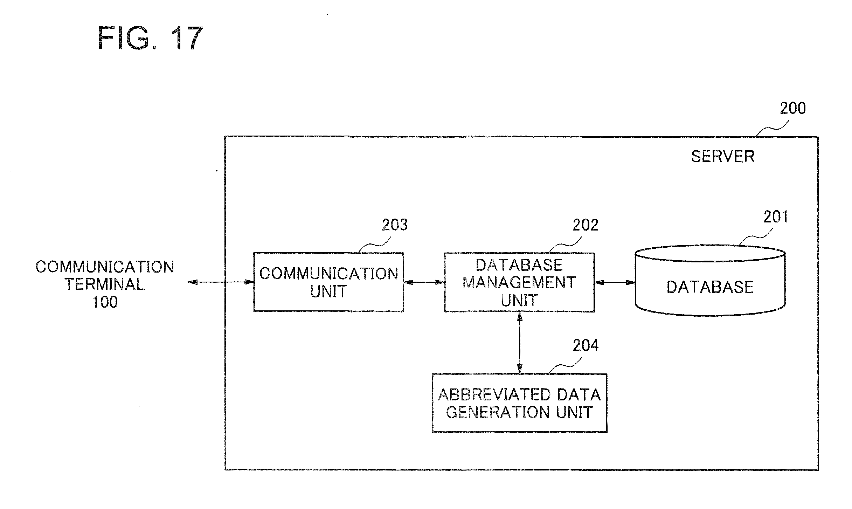

FIG. 17 is a diagram illustrating the third configuration example of the inner configuration of the server 200 shown in FIG. 1.

In the third exemplary embodiment, the server shown in FIG. 1 includes the database 201, the database management unit 202, the communication unit 203, and an abbreviated data generation unit 204 as shown in FIG. 17. FIG. 17 illustrates elements related to descriptions of the exemplary embodiment, in the elements which configures the server 200 shown in FIG. 1.

The communication unit 203 is the same as that shown in FIG. 4.

The abbreviated data generation unit 204 generates the abbreviated data on the basis of the image data outputted from the database management unit 202. A method for generating the abbreviated data is the same as that of the abbreviated data generation unit 102 of the first exemplary embodiment. The abbreviated data generation unit 204 outputs the generated abbreviated data to the database management unit 202.

The database management unit 202 outputs the image data transmitted from the communication terminal 100 to the abbreviated data generation unit 204. The database management unit 202 links the image data transmitted from the communication terminal, 100 and the abbreviated data generated by the abbreviated data generation unit 204 each other, makes the database, 201 store the image data and the abbreviated data. The database management unit 202 transmits the abbreviated data generated by the abbreviated data generation unit 204 to the communication terminal 100 through the communication unit 203. The database management unit 202 removes the image data linked with the abbreviated data from the database 201 when the removal requesting signal and the abbreviated data are transmitted from the communication terminal 100. The database management unit 202 reads out the image data linked with the abbreviated data and stored in the database 201 from the database 201 when the download requesting signal and the abbreviated data are transmitted from the communication terminal 100. The database management unit 202 transmits the read image data to the communication terminal 100 through the communication unit 203.

The database 201 links the image data transmitted from the communication terminal 100 and the abbreviated data generated by the abbreviated data generation unit 204 each other, and stores the image data and the abbreviated data. The image data and the abbreviated data linked each other are stored in the database 201 as shown in FIG. 5.

A data storing method of the third exemplary embodiment is described below. Initially, a process in which the communication terminal 100 makes the server 200 store the image data, in the data storing method of the third exemplary embodiment, is described.

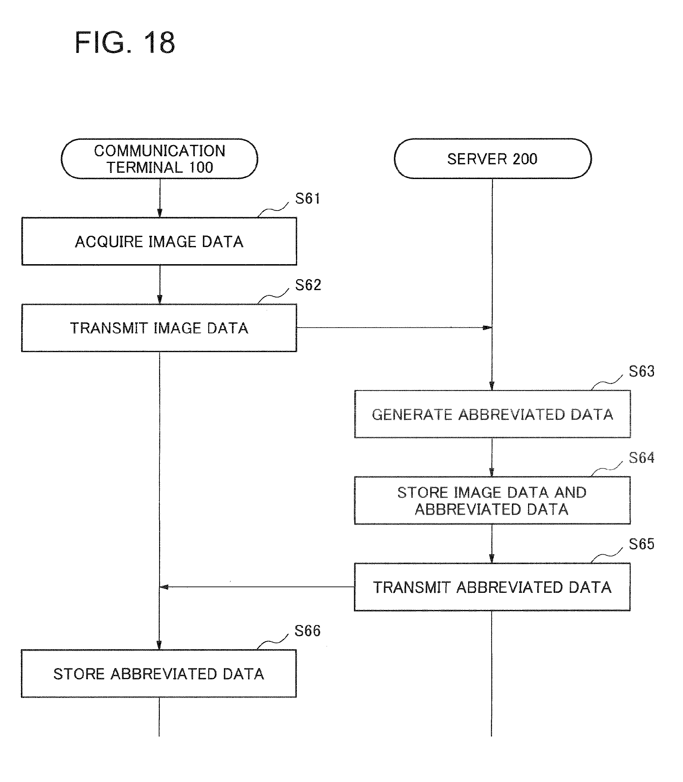

FIG. 18 is a sequence diagram illustrating the process in which the communication terminal 100 makes the server 200 store the image data, in the data storing method of the third exemplary embodiment.

Initially, the image data is acquired by the communication terminal 100 (step S61). About this acquiring method, any method described above may be employed, and is not specified here.

The acquired image data is transmitted from the communication unit 105 to the server 200 through the network 300 (step S62).

The transmission only has to be performed after the image data is acquired by the communication terminal 100. For example, the transmission may be performed when an instruction of transmission is received from a user using the communication terminal 100. Or, the transmission may be performed at predetermined timing, like preliminarily set time in a day. Or, the transmission may be performed when a data amount of the acquired image data exceeds a preliminarily set data amount or a data amount which the communication terminal 100 can store. Or, the transmission may be performed when it is determined whether or not a file format of the acquired image data is a preliminarily set file format and it is determined that the file format of the acquired image data is the preliminarily set file format.

When the image data transmitted from the communication terminal 100 is received by the communication unit 203 in the server 200, the abbreviated data corresponding to the image data is generated in the abbreviated data generation unit 204 (step S63). The received image data and the abbreviated data generated in the abbreviated data generation unit 204 are linked each other and are stored in the database by the database management unit 202 (step S64).

The abbreviated data generated in the abbreviated data generation unit 204 is transmitted from the communication unit 203 to the communication terminal 100 through the network 300 (step S65).

When the abbreviated data transmitted from the server 200 is received by the communication unit 105, the received abbreviated data is stored in the storing unit 101 (step S66).

The process in which the communication terminal 100 removes the image data stored in the server 200 and the process in which the communication terminal 100 downloads the image data stored in the server 200, after the abbreviated data is stored in the storing unit 101, are the same as those of the first exemplary embodiment.

As described above, the communication system of the third exemplary embodiment can remove the image data stored in the server from the communication terminal without downloading the image data from the server to the communication terminal, like the first and the second exemplary embodiments. That is because the communication terminal requests the server to remove the image data corresponding to the designated abbreviated data when the communication terminal displays the abbreviated data and receives removal of the image data through designation of the abbreviated data.

The communication terminal of the third exemplary embodiment does not include the abbreviated data generation unit. The communication terminal of the third exemplary embodiment, therefore, enables simplification of the structure of the communication terminal compared with the first and the second exemplary embodiments. Reduction of manufacturing cost of the communication terminal, reduction in size and weight of the communication terminal, reduction of the manufacturing cost, and the like, therefore, become possible.

### (A fourth exemplary embodiment)

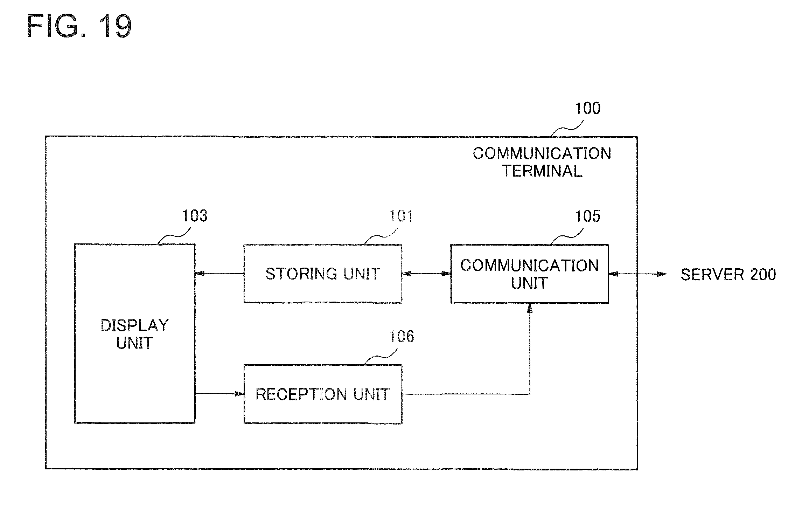

FIG. 19 is a diagram illustrating a fourth configuration example of the inner configuration of the communication terminal 100 shown in FIG. 1.

In the fourth exemplary embodiment, the communication terminal 100 shown in FIG. 1 includes the storing unit 101, the display unit 103, the communication unit 105, and the reception unit 106 as shown in FIG. 19. FIG. 19 illustrates elements related to descriptions of the exemplary embodiment, in the elements which configures the communication terminal 100 of FIG. 1.

The storing unit 101 stores the abbreviated data and the data identification information outputted from the communication unit 105. The abbreviated data and the data identification information are linked each other and stored in the storing unit 101 as shown in FIG. 10.

The display unit 103 is the same as that shown in FIG. 2.

The reception unit 106 is the same as that shown in FIG. 2.

The communication unit 105 transmits the image data acquired by the communication terminal 100 to the server 200 through the network 300. The communication unit 105 outputs the abbreviated data and the data identification information transmitted through the network 300 from the server 200, to the storing unit 101. When the abbreviated data and information representing a request for removal of the image data are outputted from the reception unit 106, the communication unit 105 reads out the data identification information linked with the outputted abbreviated data from the storing unit 101. The communication unit 105 transmits the read data identification information and the removal requesting signal for requesting removal of the image data to the server 200 through the network 300. When the abbreviated data and information representing a request for download of the image data are outputted from the reception unit 106, the communication unit 105 reads out the data identification information linked with the outputted abbreviated data from the storing unit 101. The communication unit 105 transmits the read data identification information and the download requesting signal for requesting download of the image data to the server 200 through the network 300. Designation of transmission destination is the same as that of the first exemplary embodiment.

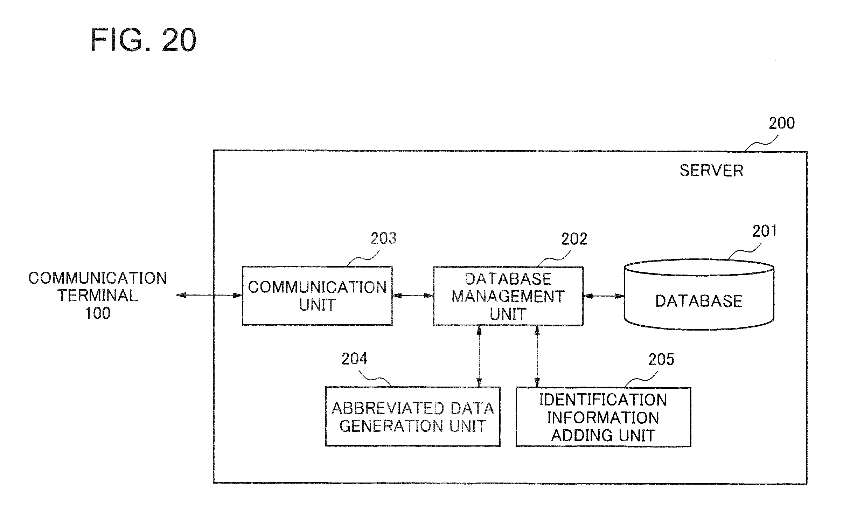

FIG. 20 is a diagram illustrating the fourth configuration example of the inner configuration of the server shown in FIG. 1.

In the fourth exemplary embodiment, the server 200 shown in FIG. 1 includes the database 201, the database management unit 202, the communication unit 203, the abbreviated data generation unit 204, and an identification information adding unit 205, as shown in FIG. 20. FIG. 20 illustrates elements related to descriptions of the exemplary embodiment, in the elements which configures the communication terminal 100 shown in FIG. 1.

The communication unit 203 is the same as that shown in FIG. 4.

The abbreviated data generation unit 204 is the same as that shown in FIG. 17.

In order to identify the image data transmitted from the communication terminal 100, the identification information adding unit 205 adds the image data to data identification information specific to the image data. The identification information adding unit 205 outputs the image data with the data identification information to the database management unit 202.

The database management unit 202 outputs the image data transmitted from the communication terminal 100 to the abbreviated data generation unit 204 and the identification information adding unit 205. The database management unit 202 links the image data outputted from the identification information adding unit 205 and the data identification information each other, and makes the database 201 store the image data and the data identification information. The database management unit 202 transmits the abbreviated data generated by the abbreviated data generation unit 204 and the data identification information which the identification information adding unit 205 adds to the image data to the communication terminal 100 through the communication unit 203. The database management unit 202 removes the image data linked with the data identification information from the database 201 when the removal requesting signal and the data identification information are transmitted from the communication terminal 100. The database management unit 202 reads out the image data linked with the data identification information and stored in the database 201 from the database 201 when the download requesting signal and the data identification information are transmitted from the communication terminal 100. The database management unit 202 transmits the read image data to the communication terminal 100 through the communication unit 203.

The database 201 links the image data and the data identification information each other, and stores the image data and the data identification information. The image data and data identification information are linked each other are stored in the database 201 as shown in FIG. 12.

A data storing method in the fourth exemplary embodiment, is described below. Initially, a process where the communication terminal 100 makes the server 200 store the image data is described, in the data storing method in the fourth exemplary embodiment.

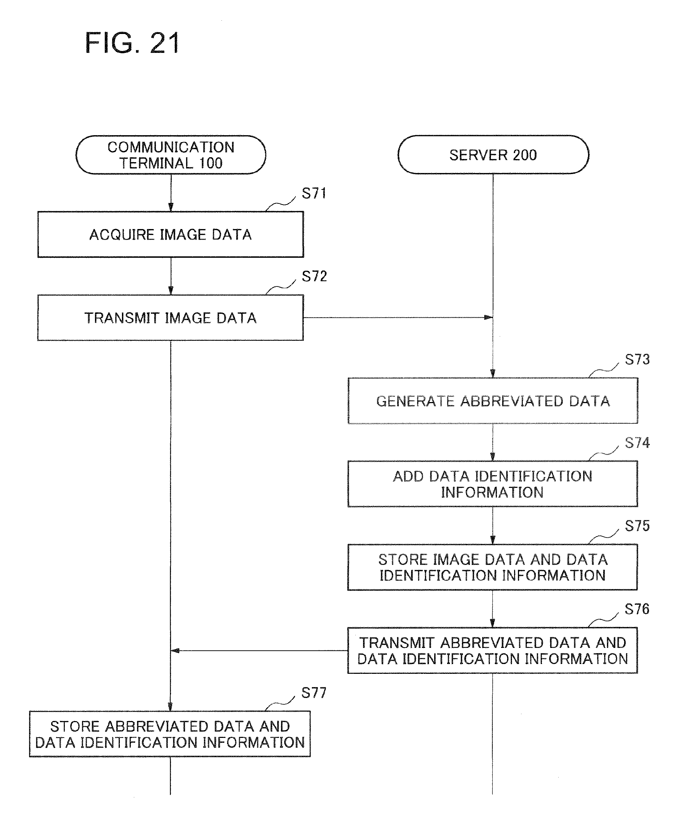

FIG. 21 is a sequence diagram illustrating the process in which the communication terminal 100 makes the server 200 store the image data, in the data storing method of the fourth exemplary embodiment.

Initially, the image data is acquired by the communication terminal 100 (step S71). In this acquiring method, any method may be employed as described above, and is not specified here.

The acquired image data is transmitted from the communication unit 105 to the server 200 through the network 300 (step 572).

This transmission timing may be the same as that of the third exemplary embodiment.

When the image data transmitted from the communication terminal 100 is received by the communication unit 203 of the server 200, the abbreviated data corresponding to the image data is generated in the abbreviated data generation unit 204 (step S73). The data identification information is added to the image data in the identification information adding unit 205 (step S74).

The image data and the data identification information are linked each other and are stored in the database 201 by the database management unit 202 (step S75).

The abbreviated data generated in the abbreviated data generation unit 204 and the data identification information which the identification information adding unit 205 adds to the image data are transmitted from the communication, unit 203 to the communication terminal 100 through the network 300 (step S76).

When the abbreviated data and the data identification information transmitted from the server 200 are received by the communication unit 105, the received abbreviated data and the data identification information are linked each other and stored in the storing unit 101 (step S77).

The process in which the communication terminal 100 removes the image data stored in the server 200 and the process in which the communication terminal 100 downloads the image data stored in the server 200, after the abbreviated data and the data identification information are stored in the storing unit 101, are the same as those of the second exemplary embodiment.

As described above, the communication system of the fourth exemplary embodiment can remove the image data stored in a second server from the communication terminal without downloading the image data from the server to the communication terminal, like the first, the second and the third exemplary embodiments. That is because the communication terminal requests the server to remove the image data corresponding to the designated abbreviated data when the communication terminal displays the abbreviated data and receives removal of the image data through designation of the abbreviated data.

The communication system of the fourth exemplary embodiment reduces a data communication volume between the communication terminal and the server compared with the first exemplary embodiment, like the second exemplary embodiment. That is because the communication terminals transmits the data identification information linked with the image data to the server instead of transmitting the abbreviated data corresponding to the image data.

The communication system of the fourth exemplary embodiment reduces usage of the database compared with the first exemplary embodiment, like the second exemplary embodiment. That is because the server stores the data identification information linked with the image data instead of storing the abbreviated data corresponding to the image data.

The communication terminal of the fourth exemplary embodiment does not include the abbreviated data generation unit, like the third exemplary embodiment. The communication system of the fourth exemplary embodiment, therefore, enables simplification of the structure of the communication terminal compared with the first and the second exemplary embodiments. Reduction of manufacturing cost of the communication terminal, reduction in size and weight of the communication terminal, reduction of the manufacturing cost, and the like, therefore, become possible.

In the first and the third exemplary embodiments, after the communication terminal 100 requests the server 200 to remove the image data, the communication terminal 100 may remove the abbreviated data corresponding to the image data, requested to be removed, from the storing unit 101.

In the second and the fourth exemplary embodiments, after the communication terminal 100 requests the server 200 to remove the image data, the communication terminal 100 may remove the abbreviated data and the data identification information corresponding to the image data, requested to be removed, from the storing unit 101.

A process in which the display unit 103 displays the abbreviated data in the first to the fourth exemplary embodiments is described below.

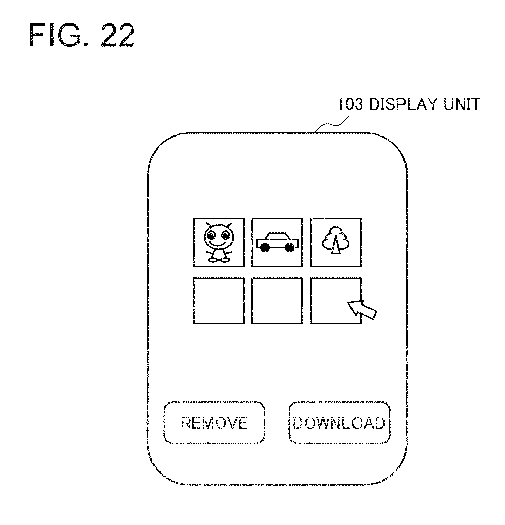

FIG. 22 is a diagram illustrating an example of a display screen in the display unit 103 on which the abbreviated data is displayed.

As shown in FIG. 22, the abbreviated data is displayed on the display unit 103, as a list. A key (button) for choosing either "removal" or "download" is displayed on the display unit 103. When a user chooses the abbreviated data of the image data which the user wants to remove and chooses "removal", the reception unit 106 receives a request for removal of the image data corresponding to the chosen abbreviated data. When a user chooses the abbreviated data of the image data which the user wants to download and chooses "download", the reception unit 106 receives a request for download of the image data corresponding to the chosen abbreviated data.

A management file to manage the abbreviated data, the image data and the data identification information may be arranged.

In the first to the fourth exemplary embodiments, the image data stored in the server 200 may be downloaded to a communication terminal other than the communication terminal 100.

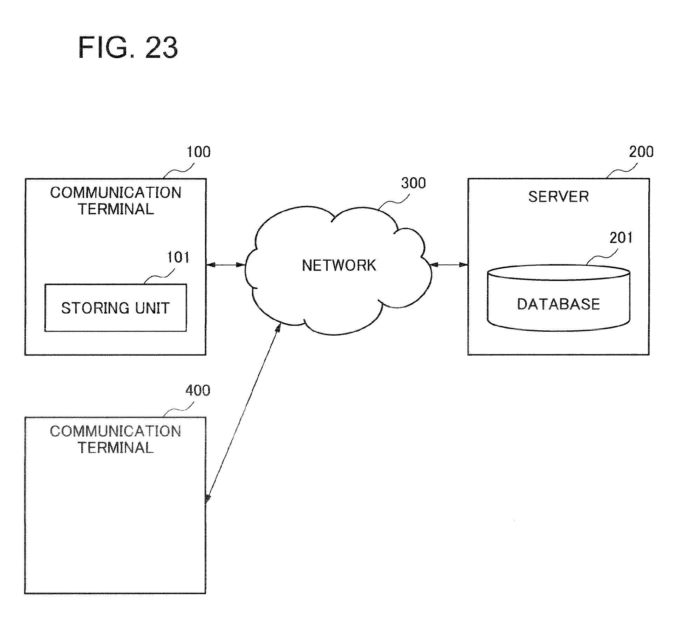

FIG. 23 is a diagram illustrating a form in which a plurality of the communication terminals are connected with the server.

As shown in FIG. 23, a communication terminal 400 other than the communication terminal 100 is connected to the server 200 through the network 300. A communication terminal other than the communication terminal 100 whose image data is stored in the server 200, such as the communication terminal 400, may access the image data stored in the server 200.

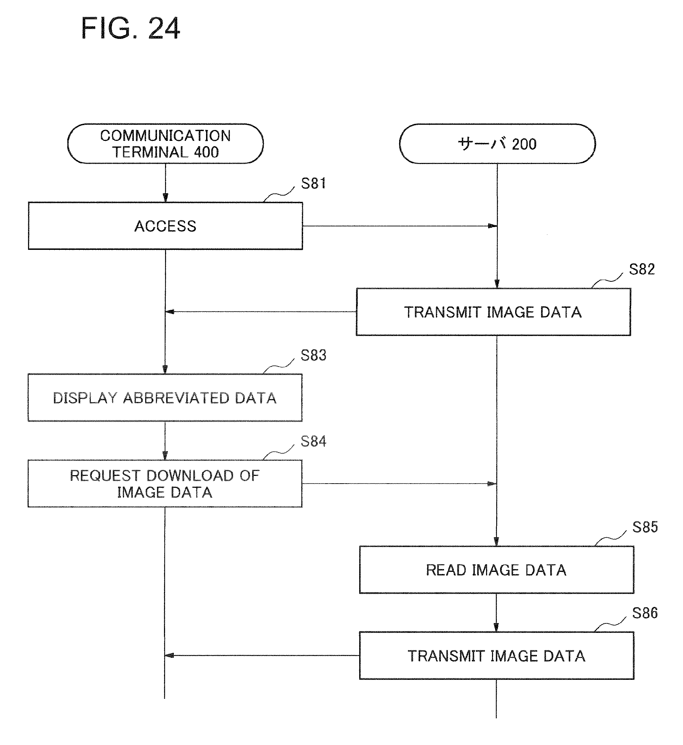

FIG. 24 is a sequence diagram illustrating a process in which the image data which is stored in the server 200 by the communication terminal 400 shown in FIG. 23 is downloaded.

When the communication terminal 400 accesses the server 200 (step S81), the abbreviated data of the image data stored in the server 200 is transmitted from the server 200 to communication terminal 400 (step S82). The "access" here only has to be the one for requesting for download of the image data stored in the server 200. For example, the "access" may be a request for connection from the communication terminal 400 to the server 200, or a request for use of software included in the server 200. Further, the "access" includes authentication using a password or the like for connection.

When the abbreviated data transmitted from the server 200 is received, the received abbreviated data is displayed on the communication terminal 400 (step S83).

After that, when a user using the communication terminal 400 requests download by choosing the abbreviated data corresponding to the image data which the user wants to download, download of the image data is requested from the communication terminal 400 to the server 200 (step S84).

And then, the requested image data is read from the database 201 in the server 200 (step S85), and the read image data is transmitted from the server 200 to the communication terminal 400 through the network 300 (step S86).

### (A fifth exemplary embodiment)

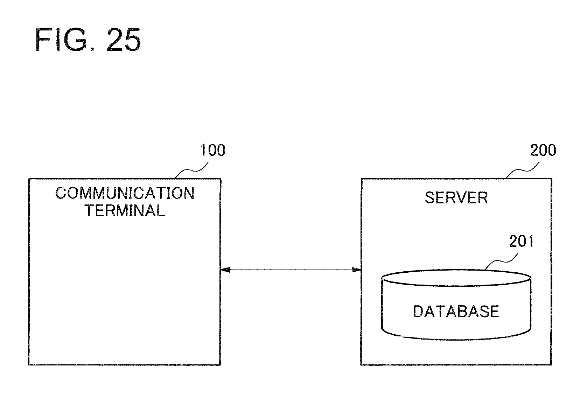

FIG. 25 is a diagram illustrating another exemplary embodiment of the communication system of the present invention.

A communication system of a fifth exemplary embodiment of the present invention includes a configuration in which the communication terminal 100 is connected to the server 200 as shown in FIG. 25. The communication terminal 100 may be connected to the server 200, for example, through the network. The server 200 includes the database 201.

The communication terminal 100 transmits the acquired image data to the server 200. The server 200 stores the image data transmitted from the communication terminal 100 in the database 201.

The communication terminal 100 displays the abbreviated data of the image data. The abbreviated data is generated on the basis of the image data so that a data amount thereof is smaller than the data amount of the image data. A user using the communication terminal 100 is able to recognize the corresponding image data by seeing the abbreviated data.

A user may request removal of the image data corresponding to the abbreviated data by designating the displayed abbreviated data from the exterior. In this case, the terminal 100 requests the server 200 to remove the image data corresponding to the abbreviated data. Being requested to remove the image data from the communication terminal 100, the server 200 removes the image data from the database.

As described above, the communication system of the fifth exemplary embodiment can remove the image data stored in the server from the communication terminal without downloading the image data from the server to the communication terminal. That is because the communication, terminal requests the server to remove the image corresponding to the designated abbreviated data when the communication terminal displays the abbreviated data and receives removal of the image data through designation of the abbreviated data.

### (A sixth exemplary embodiment)

A communication system according to a sixth exemplary embodiment of the present invention is the communication system which includes a communication terminal which transmits acquired image data and a server which stores the image data transmitted from the communication terminal, wherein
the communication terminal transmits the acquired image data to the server, displays abbreviated data that allows the image data to be identified and a data amount of which is smaller than the data amount of the image data, and when receiving, from the exterior, removal of the image data by designating the displayed abbreviated data, requests the server to remove the image data corresponding to the abbreviated data, and
the server stores the image data transmitted from the communication terminal into a database provided in the server, and when being requested to remove the image data by the communication terminal, removes the image data from the database.

### (A seventh exemplary embodiment)

A communication terminal according to a sixth exemplary embodiment of the present invention is the communication terminal which is configured to be able to connect to a server which stores image data, and includes
an abbreviated data generation unit which generates, on the basis of the image data acquired by the communication terminal, an abbreviated data which shows the image data to be identified and a data amount of which is smaller than the data amount of the image data,
a storing unit which stores the abbreviated data,
a communication unit which transmits the acquired image data to the server,
a display unit which displays the abbreviated data, and
a reception unit which receives, from the exterior, removal of the image data by designating the displayed abbreviated data,
wherein when the reception unit receives, from the exterior, removal of the image data by designating the abbreviated data displayed on the display unit, the communication unit transmits the removal requesting signal for requesting removal of the image data and the designated abbreviated data to the server.

### (An eighth exemplary embodiment)

A server according to an eighth exemplary embodiment of the present invention is the server which stores image data transmitted from a communication terminal and includes
an abbreviated data generation unit which generates, on the basis of the image data acquired by the communication terminal, an abbreviated data which shows the image data to be identified and a data amount of which is smaller than the data amount of the image data,
an identification information adding unit for adding specific data identification information for identifying the image data to the image data,
a database management unit which links the image data and the data identification information each other and storing the image data and the data identification information in a database includes in the server, and
a communication unit which transmits the image data and the data identification information to the communication terminal,
wherein the database management unit removes the image data, linked with the data identification information and stored, from the database, when a removal requesting signal for requesting removal of the image data and the data identification information added to the image data are transmitted from the communication terminal.

### (A ninth exemplary embodiment)

A server according to a ninth exemplary embodiment of the present invention is the server which stores image data transmitted from a communication terminal and includes
an abbreviated data generation unit which generates, on the basis of the image data acquired by the communication terminal, an abbreviated data which shows the image data to be identified and a data amount of which is smaller than the data amount of the image data,
an identification information adding unit for adding specific data identification information for identifying the image data to the image data,
a database management unit which links the image data and the data identification information each other and storing the image data and the data identification information in a database includes in the server, and
a communication unit which transmits the image data and the data identification information to the communication terminal,
wherein the database management unit removes the image data, linked with the data identification information and stored, from the database, when a removal requesting signal for requesting removal of the image data and the data identification information added to the image data are transmitted from the communication terminal.

### (A tenth exemplary embodiment)

A data storing method according to a tenth exemplary embodiment of the present invention is the data storing method which is used in a communication system including a communication terminal which transmits acquired image data and a server which stores the image data transmitted from the communication terminal, and includes
a process in which the communication terminal transmits the acquired image data to the server,
a process in which the server stores the image data transmitted from the communication terminal in a database provided in the server,
a process in which the communication terminal displays abbreviated data that allows the acquired image data to be identified and a data amount of which is smaller than the data amount of the image data;
a process in which when receiving, from the exterior, removal of the image data by designating the displayed abbreviated data, the communication terminal requests the server to remove the image data corresponding to the abbreviated data; and
a process in which when being requested to remove the image data by the communication terminal, the server removes the image data from the database.

### (An eleventh exemplary embodiment)

A program according to an eleventh exemplary embodiment of the present invention is the program which is executed in a communication terminal, configured to be connectable to a server storing image data, and the program executes
a step of, on the basis of the image data acquired by the communication terminal, generating abbreviated data that shows the image data to be identified and a data amount of which is smaller than the data amount of the image data,
a step of storing the abbreviated data in a storing unit provided in the communication terminal,
a step of transmitting the acquired image data to a server,
a step of displaying the abbreviated data,
a step of receiving removal of the image data by designating the displayed abbreviated data from the exterior, and
a step of, when receiving, from the exterior, removal of the image data by designating the displayed abbreviated data, transmitting a removal requesting signal for requesting removal of the image data and the designated abbreviated data to the server.

### (A twelfth exemplary embodiment)

A program according to a twelfth exemplary embodiment of the present invention is the program which is executed in a server which stores image data transmitted from a communication terminal, and the program executes
a step of, on the basis of the image data transmitted from the communication terminal, generating abbreviated data that shown the image data to be identified and a data amount of which is smaller than the data amount of the image data,
a step of storing the image data and the abbreviated data linked each other in a database provided in the server,
a step of transmitting the abbreviated data to the communication terminal, and
a step of removing, from the database, the image data linked with the abbreviated data and stored when a removal requesting signal for requesting removal of the image data and the abbreviated data corresponding to the image data are transmitted from the communication terminal.

Each of the processes described above in the communication terminal 100 and the server 200 may be performed by a logic circuit which is made in accordance with the purpose. Or, a program including a description of each of the processes may be stored in a recording medium which is readable by the communication terminal 100 and the server 200. And the program stored in the recording medium may be read by the communication terminal 100 and the server 200, and be executed. The recording medium which is readable by the communication terminal 100 and the server 200 means a removable recording medium, such as a floppy-disc (trademark), a magneto optical disc, a DVD or a CD. The recording medium also means a HDD, built in the communication terminal 100 and the server 200, or the like. The program recorded in the recording medium is read by a CPU (not shown) each included in the communication terminal 100 and the server 200, and the same processes described above is performed in accordance with control of the CPU. The CPU works as a compute running the program read from the recording medium storing the program.

While the present invention has been particularly shown and described with reference to preferred exemplary embodiments thereof, the present invention is not limited to these embodiments. It is obvious that various changes in form and details may be made therein without departing from the spirit and scope of the present invention as defined by the claims.

This application is based upon and claims the benefit of priority from Japanese patent application No. 2009-082213, filed on March 30, 2009, the disclosure of which is incorporated herein in its entirety by reference.

### EXPLANATION OF REFERENCE

- 100, 400: communication terminal
- 101: storing unit
- 102, 204: abbreviated data generation unit
- 103: display unit
- 104, 205: identification information adding unit
- 105, 203: communication unit
- 106: reception unit
- 200: server
- 201: database
- 202: database management unit
- 300: network

## Claims

1. A communication system comprising:
a communication terminal which transmits acquired image data; and
a server which stores image data transmitted from the communication terminal, wherein
the communication terminal transmits the acquired image data to the server, displays abbreviated data that allows the image data to be identified and a data amount of which is smaller than the data amount of the image data, and when receiving, from the exterior, removal of the image data by designating the displayed abbreviated data, requests the server to remove the image data corresponding to the abbreviated data, and
the server stores the image data transmitted from the communication terminal into a database comprised in the server, and when being requested to remove the image data by the communication terminal, removes the image data from the database.

2. The communication system according to claim 1, wherein
the communication terminal, when acquiring the image data, generates the abbreviated data on the basis of the image data, transmits the abbreviated data with the image data to the server when transmitting the image data to the server, stores the abbreviated data in storage means comprised in the communication terminal, and transmits a removal requesting signal for requesting removal of the image data and the designated abbreviated data to the server when requesting the server to remove the image data, and
the server links the abbreviated data transmitted from the communication terminal with the image data and stores the abbreviated data in the database when storing the image data in the database, and removes the image data, linked with the abbreviated data transmitted from the communication terminal and stored, from the database when being requested to remove the image data.

3. The communication system according to claim 1, wherein
the communication terminal, when acquiring the image data, generates the abbreviated data on the basis of the image data, adds specific data identification information for identifying the image data to the image data, links the abbreviated data and the data identification information each other, stores the abbreviated data and the data identification information in storage means comprised in the communication terminal, transmits the data identification information with the image data to the server when transmitting the image data to the server, and transmits the data identification information linked with the designated abbreviated data and a removal requesting signal for requesting removal of the image data when requesting the server to remove the image data, and
the server links the data identification information transmitted from the communication terminal with the image data and stores the data identification information in the database when storing the image data in the database, and removes the image data, linked with the data identification information transmitted from the communication terminal and stored, from the database when being requested to remove the image data.

4. The communication system according to claim 1, wherein
the server generates the abbreviated data on the basis of the image data when the image data is transmitted from the communication terminal, links the abbreviated data with the image data and stores the abbreviated data in the database when storing the image data in the database, transmits the generated abbreviated data to the communication terminal, and removes the image data, linked with the abbreviated data transmitted from the communication terminal and stored, from the database when being requested to remove the image data, and
the communication terminal stores the abbreviated data transmitted from the server in storage means comprises in the communication terminal, and transmits the designated abbreviated data and a removal requesting signal for requesting removal of the image data to the server when requesting the server to remove the image data.

5. The communication system according to claim 1, wherein
the server generates the abbreviated data on the basis of the image data and adds specific data identification information for identifying the image data to the image data when the image data is transmitted from the communication terminal, links the data identification information with the generated abbreviated data and stores the data identification information in the database when storing the image data in the database, transmits the generated abbreviated data and the data identification information to the communication terminal, and removes the image data, linked with the data identification information transmitted from the communication terminal and stored, from the database when being requested to remove the image data, and
the communication terminal links the abbreviated data transmitted from the server and the data identification information each other and stores the abbreviated data and the data identification information in storage means comprised in the communication terminal, and transmits the data identification information linked with the designated abbreviated data and a removal requesting signal for requesting removal of the image data when requesting the server to remove the image data.

6. The communication system according to claim 2 or claim 4,
wherein
the communication terminal, after requesting the server to remove the image data, removes the abbreviated data corresponding to the image data, requested to be removed, from the storage means.

7. The communication system according to claim 3 or claim 5,
wherein
the communication terminal, after requesting the server to remove the image data, removes the abbreviated data and the data identification information corresponding to the image data, requested to be removed, from the storage means.

8. The communication system according to claim 1, wherein
when a data amount of the acquired image data exceeds a predetermined data amount, the communication terminal transmits the image data to the server.

9. The communication system according to claim 1, wherein
the communication terminal, when a file format of the acquired image data is a predetermined file format, transmits the image data to the server.

10. The communication system according to claim 1, wherein
the communication terminal, when receiving, from the exterior, download of the image data by designating the displayed abbreviated data, requests the server to download the image data corresponding to the abbreviated data and,
the server, when being requested to download the image data, reads out the image data from the database and transmits the read image data to the communication terminal.

11. The communication system according to claim 1, wherein
the communication terminal displays a thumbnail image of the image data as the abbreviated data.

12. A communication terminal comprising:
abbreviated data generation means for generating abbreviated data that shows inputted image data to be identified and a data amount of which is smaller than the image data;
storage means for storing the abbreviated data;
communication means for transmitting the acquired image data to a server;
display means for displaying the abbreviated data; and
reception means for receiving designation of the abbreviated data from the exterior,
wherein the communication means transmits a removal request signal for requesting to remove the image data corresponding to the designated abbreviated data and the designated abbreviated data to the server.

13. The communication terminal according to claim 12, further comprising;
identification information adding means for adding specific data identification information for indentifying the image data to the image data,
wherein the storage means links the data identification information with the abbreviated data and stores the data identification information, and
the communication means transmits the acquired image data and the data identification information added to the image data to the server, and transmits the data identification information linked with the abbreviated data instead of the abbreviated data and the removal requesting signal when the reception means receives designation of the abbreviated data from the exterior.

14. The communication terminal according to claim 12, wherein
the storage means, after the communication means transmits the abbreviated data and the removal requesting signal to the server, removes the abbreviated data.

15. The communication terminal according to claim 13, wherein
the storage means, after the communication means transmits the data identification information and the removal requesting signal to the server, removes the data identification information and the abbreviated data linked with the data identification information.

16. The communication terminals according to claim 12, wherein
when a data amount of the acquired image data exceeds a predetermined data amount, the communication means transmits the image data to the server.

17. The communication terminal according to claim 13, wherein
when a data amount of the acquired image data exceeds a predetermined data amount, the communication means transmits the image data and the data identification information to the server.

18. The communication terminal according to claim 12, wherein
when a file format of the acquired image data is a predetermined file format, the communication means transmits the image data to the server.

19. The communication terminal according to claim 13, wherein
when a file format of the acquired image data is a predetermined file format, the communication means transmits the image data and the data identification information to the server.

20. The communication terminal according to claim 12, wherein
the communication means transmits a download requesting signal to the server for requesting the server to download the image data corresponding to the abbreviated data when the reception means receives, from the exterior, download of the image data by designating the abbreviated data displayed on the display means.

21. The communication terminal according to claim 12, wherein
the abbreviated data generation means generates a thumbnail image of the image data as the abbreviated data.

22. A server which stores image data transmitted from a communication terminal, the server comprising:
abbreviated data generation means for generating, on the basis of the image data transmitted from the communication terminal, abbreviated data that shows the image data to be identified and a data amount of which is smaller than the data amount of the image data;
database management means for linking the image data and the abbreviated data each other and storing the image data and the abbreviated data in a database comprised in the server; and
communication means for transmitting the abbreviated data to the communication terminal,
wherein the database management means removes the image data from the database when being requested to remove the image data by the communication terminal.

23. The server according to claim 22, wherein
the request for removal of the image data is carried out through transmission of a removal requesting signal for requesting removal of the image data and the abbreviated data corresponding to the image data from the communication terminal,
the database management means removes the image data, linked with the abbreviated data and stored, from the database when being requested to remove the image data.

24. The server according to claim 22, further comprising:
identification information adding means for adding specific data identification information for identifying the image data to the image data,
wherein the database management means links the data identification information with the image data and stores the data identification information in the database,
the communication means transmits the data identification information with the abbreviated data to the communication terminal,
the request for removal of the image data is carried out through transmission of a removal requesting signal for requesting removal of the image data and the data identification information linked with the image data from the communication terminal, and
the database management means removes the image data, linked with the data identification information and stored, from the database when being requested to remove the image data,.

25. A data storing method, which is used in a communication system including a communication terminal which transmits acquired image data and a server which stores the image data transmitted from the communication terminal, the method comprising:
an image data transmission process in which the communication terminal transmits the acquired image data to the server;
an image data storage process in which the server stores the image data transmitted from the communication terminal in a database comprised in the server;
a process in which the communication terminal displays abbreviated data that allows the acquired image data to be identified and a data amount of which is smaller than the data amount of the image data;
a removal request process in which the communication terminal requests the server to remove the image data corresponding to the abbreviated data when receiving, from the exterior, removal of the image data by designating the displayed abbreviated data; and
an image data removal process in which the server removes the image data from the database when being requested to remove the image data by the communication terminal.

26. The data storing method according to claim 25, further comprising:
a process in which the communication terminal generates the abbreviated data on the basis of the acquired image data; and
a process in which the communication terminal stores the abbreviated data in the storage means comprised in the communication terminal,
wherein the image data transmission proccess includes a step of transmitting the image data and the abbreviated data to the server,
the image data storage process includes a step of linking the abbreviated data with the image data and storing the abbreviated data in the database,
the removal request process includes a step of transmitting a removal requesting signal for requesting removal of the image data and the designated abbreviated data to the server, and
the image data removal process includes a step of removing the image data, linked with the abbreviated data transmitted with the removal requesting signal and stored, from the database.

27. The data storing method according to claim 25, further comprising:
a process in which the communication terminal generates the abbreviated data on the basis of the acquired image data;
a process in which the communication terminal adds specific data identification information for identifying the image data to the image data; and
a process in which the communication terminal links the abbreviated data and the data identification information each other and stores the abbreviated data and the data identification information in storage means provided in the communication terminal,
wherein the image data transmission process includes a step of transmitting the image data and the data identification information to the server,
the image data storage process includes a step of linking the data identification information with the image data and storing the data identification information in the database,
the removal request process includes a step of transmitting a removal requesting signal for requesting removal of the image data and the data identification information linked with the designated abbreviated data to the server, and
the image data removal process includes a step of removing the image data, linked with the data identification information transmitted with the removal requesting signal and stored, from the database.

28. The data storing method according to claim 25, further comprising:
a process in which the server generates the abbreviated data on the basis of the image data, when the image data is transmitted from the communication terminal;
a process in which the server transmits the generated abbreviated data to the communication terminal; and
a process in which the communication terminal stores the abbreviated data transmitted from the server in storage means comprised in the communication terminal,
wherein the image data storage process includes a step of linking the abbreviated data with the image data and stores the abbreviated data in the database,
the removal request process includes a step of transmitting a removal requesting signal for requesting removal of the image data and the designated abbreviated data to the server, and
the image data removal process includes a step of removing the image data, linked with the abbreviated data transmitted with the removal requesting signal and stored, from the database.

29. The data storing method according to claim 25, further comprising:
a process in which the server generates the abbreviated data on the basis of the image data when the image data is transmitted from the communication terminal;
a process in which the server adds specific data identification information for identifying the image data to the image data;
a process in which the server transmits the generated abbreviated data and the data identification information to the communication terminal; and
a process in which the communication terminal links the abbreviated data transmitted from the server and the data identification information each other and stores the abbreviated data and the data identification information in storage means provided in the communication terminal,
wherein the image data storage process includes a step of linking the data identification information with the image data and stores the data identification information in the database,
the removal request process includes a step of transmitting a removal requesting signal for requesting removal of the image data and the data identification information linked with the designated abbreviated data to the server, and
the image data removal process includes a step of removing the image data, linked with the data identification information transmitted with the removal requesting signal and stored, from the database.

30. The data storing method according to claim 26 or claim 28, further comprising
a process in which the communication terminal, after requesting the server to remove the image data, removes the abbreviated data corresponding to the image data, whose removal is requested, from the storage means.

31. The data storing method according to claim 27 or claim 29, further comprising
a process in which the communication terminal, after requesting the server to remove the image data, removes the abbreviated data and the data identification information corresponding to the image data, whose removal is requested, from the storage means.

32. The data storing method according to claim 25, further comprising
a process in which the communication terminal transmits the image data to the server when a data amount of the acquired image data exceeds a predetermined data amount.

33. The data storing method according to claim 25, further comprising
a process in which the communication terminal transmits the image data to the server when a file format of the acquired image data is a predetermined file format.

34. The data storing method according to claim 25, further comprising:
a process in which the communication terminal, when receiving, from the exterior, download of the image data by designating the displayed abbreviated data, requests the server to download the image data corresponding to the abbreviated data;
a process in which the server, when being requested to download the image data by the communication terminal, reads out the image data from the database; and
a process in which the server transmits the read image data to the communication terminal.

35. The data storing method according to claim 25, further comprising:
a process in which the communication terminal displays a thumbnail image of the image data as the abbreviated data.

36. A computer-readable recording medium storing a program causing a communication terminal to execute:
a step of, on the basis of image data acquired by the communication terminal, generating abbreviated data that shows the image data to be identified and a data amount of which is smaller than the data amount of the image data;
a step of storing the abbreviated data in storage means comprised in the communication terminal;
a step of transmitting the acquired image data to the server;
a step of displaying the abbreviated data;
a step of receiving, from the exterior, removal of the image data by designating the displayed abbreviated data; and
a step of transmitting, when removal of the image data is received, from the exterior, by designating the displayed abbreviated data, a removal requesting signal for requesting removal of the image data and the designated abbreviated data to the server.

37. The computer-readable recording medium according to claim 36 storing the program for executing:
a step of adding specific data identification information for indentifying the image data to the image data;
a step of linking the abbreviated data and the data identification information each other and storing the abbreviated data and the data identification information in the storage means;
a step of transmitting the acquired image data and the data identification information added to the image data to the server; and
a step of transmitting, when receiving, from the exterior, removal of the image data, by designating the displayed abbreviated data, the data identification information linked with the abbreviated data and stored in the storage means instead of the designated abbreviated data, with the removal requesting signal, to the server.

38. The computer-readabie recording medium according to claim 36 storing the program for executing
a step of removing the abbreviated data from the storage means after the abbreviated data and the removal requesting signal are transmitted to the server.

39. The computer-readable recording medium according to claim 37 storing the program for executing
a step of removing the data identification information and the abbreviated data linked with the data identification information from the storage means after the data identification information and the removal requesting signal are transmitted to the server.

40. The computer-readable recording medium according to claim 36 storing the program for executing
a step of transmitting the image data to the server when a data amount of the acquired image data exceeds a predetermined data amount.

41. The computer-readable recording medium according to claim 37 storing the program for executing
a step of transmitting the image data and the data identification information to the server when a data amount of the acquired image data exceeds a predetermined data amount.

42. The computer-readable recording medium according to claim 36 storing the program for executing
a step of, when a file format of the acquired image data is a predetermined file format, transmitting the image data to the server.

43. The computer-readable recording medium according to claim 37 storing the program for executing
a step of, when a file format of the acquired image data is a predetermined file format, transmitting the image data and the data identification information to the server.

44. The computer-readable recording medium according to claim 36 storing the program for executing
a step of, when receiving, from the exterior, download of the image data by designating the displayed abbreviated data, transmitting a download requesting signal to the server for requesting the server to download the image data corresponding to the abbreviated data.

45. The computer-readable recording medium to the server claim 36 storing the program for executing
a step of generating a thumbnail image of the image data as the abbreviated data.

46. A computer-readable recording medium storing a program causing a server to execute:
a step of, on the basis of image data transmitted from a communication terminal, generating abbreviated data that shows the image data to be identified and a data amount of which is smaller than the data amount of the image data;
an image data storing step of linking the image data and the abbreviated data each other and storing the image data and the abbreviated data in a database comprised in the server;
an abbreviated data transmitting step of transmitting the abbreviated data to the communication terminal; and
an image data removing step of removing the image data from the database when removal of the image data is requested by the communication terminal.

47. The computer-readable recording medium according to claim 46 storing the program, wherein
the image data removing step includes a step of removing the image data, linked with the abbreviated data transmitted from the communication terminal and stored, from the database.

48. The computer-readable recording medium according to claim 46, storing a program for further executing
a step of adding specific data identification information to the image data,
wherein the image data storing step includes a step of linking the data identification information with the image data and storing the data identification information in the database,
the abbreviated data transmitting step includes a step of transmitting the data identification information with the abbreviated data to the communication terminal, and
the image data removing step includes a step of removing the image data, linked with the data identification information transmitted from the communication terminal and stored, from the database.
